Europäisches Patentamt

European Patent Office

Office européen des brevets

(11) Veröffentlichungsnummer: **0 309 813 B1**

(12) **EUROPÄISCHE PATENTSCHRIFT**

(45) Veröffentlichungstag der Patentschrift: **09.12.92**

(21) Anmeldenummer: **88115027.0**

(22) Anmeldetag: **14.09.88**

(51) Int. Cl.⁵: **H05G 1/60,** H04N 5/32

(54) **Röntgendiagnostikeinrichtung.**

(30) Priorität: **28.09.87 DE 3732636**

(43) Veröffentlichungstag der Anmeldung:
**05.04.89 Patentblatt 89/14**

(45) Bekanntmachung des Hinweises auf die
Patenterteilung:
**09.12.92 Patentblatt 92/50**

(84) Benannte Vertragsstaaten:
**BE DE FR GB IT**

(56) Entgegenhaltungen:
**DE-A- 3 225 061**
**DE-A- 3 523 514**
**DE-B- 2 414 806**
**US-A- 4 473 843**
**US-A- 4 533 947**

(73) Patentinhaber: **SIEMENS AKTIENGESELL-
SCHAFT
Wittelsbacherplatz 2
W-8000 München 2(DE)**

(72) Erfinder: **Kastenmeier, Konrad, Dipl.-Ing. (FH)
Steigerwald-Allee 3
W-8520 Erlangen(DE)**
Erfinder: **Hefter, Peter, Dipl.-Ing. (FH)
Forchheimer Strasse 57
W-8520 Erlangen(DE)**
Erfinder: **Miglus, Thorsten
Finkenweg 7
W-8674 Naila(DE)**

**Beschreibung**

Die Erfindung betrifft eine Röntgendiagnostikeinrichtung mit einem Röntgengenerator, einer Röntgenröhre, einer Röntgenbildverstärker-Fernsehkette, die einen Röntgenbildverstärker, eine Fernsehkamera und einen Monitor aufweist, und mit einer eine Schwellwertschaltung aufweisenden, au den Fernsehkamera angeschlossenen Regelschaltung für die Röngendiagnostikeinrichtung.

Eine Röntgendiagnostik einrichtung der Eingangs genannten Art ist beispielsweise aus der US-A-4 473 843 bekannt. Beim dort beschriebenen Gegenstand wird zu mehreren Bildpunkten die zugehörige Intensität gespeichert und mit einem vorgebbaren Schwellwert verglichen, bis eine gewünschte Anzahl Bildpunkte einen der Anzahl entsprechenden Schwellwert übersteigt. Danach wird die Blende im Vergleich zu vorgegebenen kurven eingestellt.

In der DE-OS 32 25 061 ist eine Röntgendiagnostikeinrichtung beschrieben, bei der ein Teil des Ausgangsbildes des Röntgenbildverstärkers durch einen Lichtteiler auf einen Detektor ausgekoppelt wird, der aus einer Matrix von Fotosensoren besteht. Die parallelen Ausgänge der Fotosensoren sind über Schalter an einen Summenverstärker angeschlossen. Die Ausgangssignale der einzelnen Fotodetektoren können durch veränderliche Widerstände bewertet werden. Das Ausgangssignal des Summenverstärkers wird als Istwertsignal mit einem Sollwert verglichen und aufgrund des Vergleiches wird der Hochspannungsgenerator geschaltet und gesteuert.

Es hat sich aber als nachteilig erwiesen, daß zum einen ein Lichtverteiler vorgesehen sein muß; andererseits ist es aber sehr aufwendig, eine Matrix mit Fotosensoren zu verwenden, da jedem Fotosensor ein Verstärker zugeordnet ist. Dadurch ergibt sich nur eine geringe Auflösung des Bildes, da nur eine begrenzte Anzahl von Fotosensoren aus Platzgründen Verwendung finden kann. Weiterhin können, bedingt durch die Verwendung von einstellbaren Widerständen, keine kontinuierliche Veränderung und Anpassung der Bewertung erfolgen.

Die Erfindung geht von der Aufgabe aus, eine Röntgendiagnostikeinrichtung der eingangs genannten Art zu schaffen, bei der ohne großen Mehraufwand an teuren Bauteilen eine feinere und somit genauere Unterteilung des Röntgenbildes bei gleichzeitiger Anpassung der Bewertung ermöglicht wird.

Die Aufgabe wird erfindungsgemäß dadurch gelöst, daß die Regelschaltung eine Reduktionsschaltung zur Datenreduktion aufweist, die mehrere Bildpunkte des Röntgenbildes zu Bildbereichen zusammenfaßt, daß die Schwellwertschaltung zur Konturerkennung mit der Reduktionsschaltung verbunden ist, die die Meßwerte der einzelnen Bildbereiche mit einem Schwellwert vergleicht und nur die Meßsignale an den Ausgang durchläßt, die dunkleren Bereichen zugeordnet sind und relevanten Bildbereichen entsprechen. Durch einen derartigen Aufbau ist es möglich, auch während der Erfassung des Istwertsignales, eine Veränderung der für die Meßwerterfassung relevanten Bildbereiche durchzuführen. Dadurch erhält man eine dynamische, an die wirklichen Gegebenheiten angepaßte Dominante, die das erforderliche Meßwertsignal liefert.

Eine vorteilhafte Zusammenfassung der Meßwertsignale erhält man, wenn an der Schwellwertschaltung eine Integrationsschaltung angeschlossen ist, die einen Mittelwert der relevanten Bildbereiche bestimmt und wenn die Integrationsschaltung mit dem Röntgengenerator zur Regelung verbunden ist. Besondere, beispielsweise durch die Kreisaustastung oder eine Tiefenblende ausgeblendete Bildbereiche können auf einfache Weise unterdrückt werden, wenn die Regelschaltung eine Maskierungsschaltung aufweist, die irrelevante, ausgeblendete Bildbereiche kennzeichnet und die mit der Schwellwertschaltung zur Unterdrückung der Meßsignale der irrelevanten Bildbereiche verbunden ist. Die Schwelle der Schwellwertschaltung kann den gegebenen Helligkeitswerten angepaßt werden, wenn an der Schwellwertschaltung eine Detektorschaltung angeschlossen ist, die den Mittelwert der Helligkeit des gesamten relevanten Bildbereiches bestimmt, und aus dem die Schwelle ermittelt. Neben der Ermittlung der Dominante läßt sich auch eine in einem Strahlengang einer Röntgenröhre angeordnete Tiefenblende steuern, wenn die Regelschaltung mit der Steuerung der Tiefenblende verbunden ist.

Im nachfolgenden ist die Erfindung anhand eines in der Zeichnung dargestellten Ausführungsbeispieles näher erläutert. Es zeigen:

Fig. 1 ein Blockschaltbild einer erfindungsgemäßen Röntgendiagnostikeinrichtung,

Fig. 2 ein Blockschaltbild der in Fig. 1 dargestellten Regelschaltung.

Fig. 3 ein Blockschaltbild der in Fig. 2 dargestellten Mittelwertschaltung,

Fig. 4 ein Prinzipbild einer Tiefenblende und

Fig. 5 ein Blockschaltbild der in Fig. 2 dargestellten Steuerschaltung für die Tiefenblende.

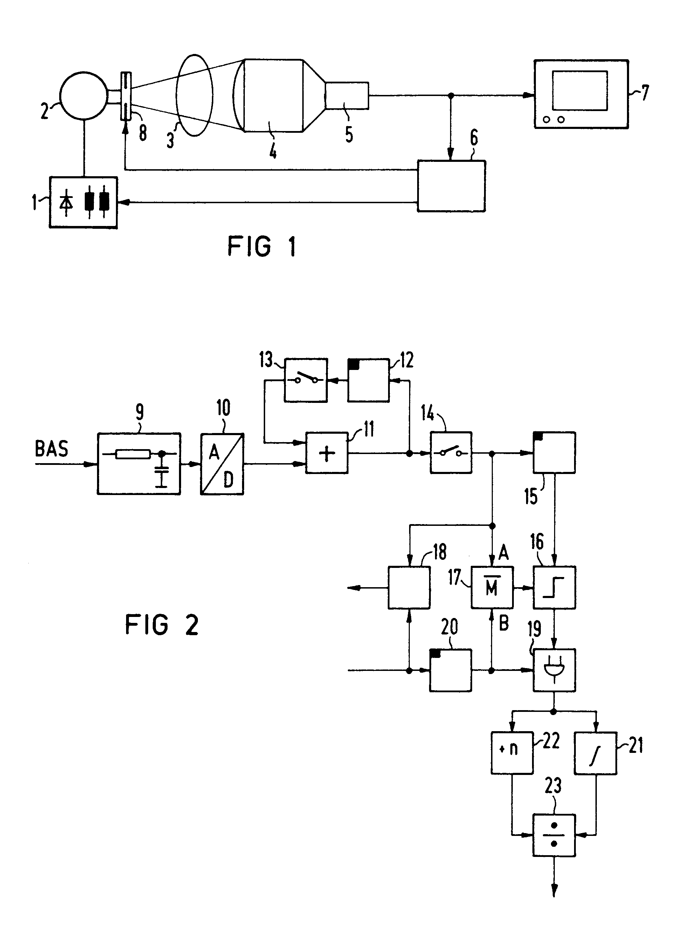

In der Fig. 1 ist eine durch einen Hochspannungsgenerator 1 betriebene Röntgenröhre 2 dargestellt, die ein Röntgenstrahlenbündel aussendet, das einen Patienten 3 durchdringt. Das durch den Patienten 3 abgeschwächte Röntgenstrahlenbündel fällt auf den Eingangsleuchtschirm eines Röntgenbildverstärkers 4, der das Strahlenbild in ein sichtbares Bild umwandelt. An den Röntgenbildverstärker 4 ist eine Fernsehkamera 5 angekoppelt, die das Ausgangsbild des Röntgenbildverstärkers 4 in ein elektrisches BAS-Signal umwandelt, das einer Regelschaltung 6 und einem Monitor 7 zugeführt wird, der das von der Fernsehkamera 5 erfaßte Strahlenbild wiedergibt. Die Regelschaltung 6 ist zum einen mit dem Hochspannungsgenerator 1 zu dessen Steuerung und mit einer an der Röntgenröhre 2 angebrachten Tiefenblende 8 zur Verstellung des Röntgenstrahlenbündels verbunden.

In der Fig. 2 ist die Regelschaltung 6 dargestellt. Das BAS-Signal der Fernsehkamera 5 wird über einen Tiefpaß 9 einem Analog/Digital-Wandler (A/D-Wandler 10) zugeführt, dessen Ausgang mit einem ersten Eingang einer ersten Additionsstufe 11 verbunden ist. Der Ausgang der ersten Additionsstufe 11 ist über einen ersten Speicher 12 für die Zwischenspeicherung von datenreduzierten Helligkeitswerten und einer ersten Schaltstufe 13 auf den zweiten Eingang der ersten Additionsstufe 11 zurückgekoppelt. An der ersten Additionsstufe 11 ist weiterhin eine zweite Schaltstufe 14 angeschlossen. Der Tiefpaß 9, die erste Additionsstufe 11, der Speicher 12 sowie die beiden Schaltstufen 13 und 14 bilden eine Reduktionsschaltung zur Datenreduktion, bei der mehrere Bildpunkte des Röntgenbildes zu Bildbereichen zusammengefaßt werden.

An der zweiten Schaltstufe ist ein zweiter Speicher 15 für die reduzierten Werte für die Bildbereiche angeschlossen, dessen Ausgang mit einer Schwellwertschaltung 16 verbunden ist. An der zweiten Schaltstufe 14 ist weiterhin eine erste Mittelwertschaltung 17 angeschlossen, die ebenfalls mit der Schwellwertschaltung 16 verbunden ist. Die erste Mittelwertschaltung 17 bildet eine Detektorschaltung für den Gesamtmittelwert der Helligkeit des Bildsignales. Ebenfalls ist an der zweiten Schaltstufe 14 eine Steuerschaltung 18 für die Tiefenblende 8 angeschlossen, die mit Stellmitteln und Positionsgebern der Tiefenblende 8 verbunden ist.

An der Schwellwertschaltung 16 ist eine Maskierungsschaltung 19 angeschlossen, die mit einem dritten Speicher 20 verbunden ist, in dem die auszublendenden Bildbereiche eingespeichert sind. Die Maskierungsschaltung 19 ist mit einer Integrationsstufe 21 und einem ersten Zähler 22 verbunden, die beide an einer ersten Teilerstufe 23 angeschlossen sind. Der Ausgang der ersten Teilerstufe 23 ist mit dem Hochspannungsgenerator 1 verbunden.

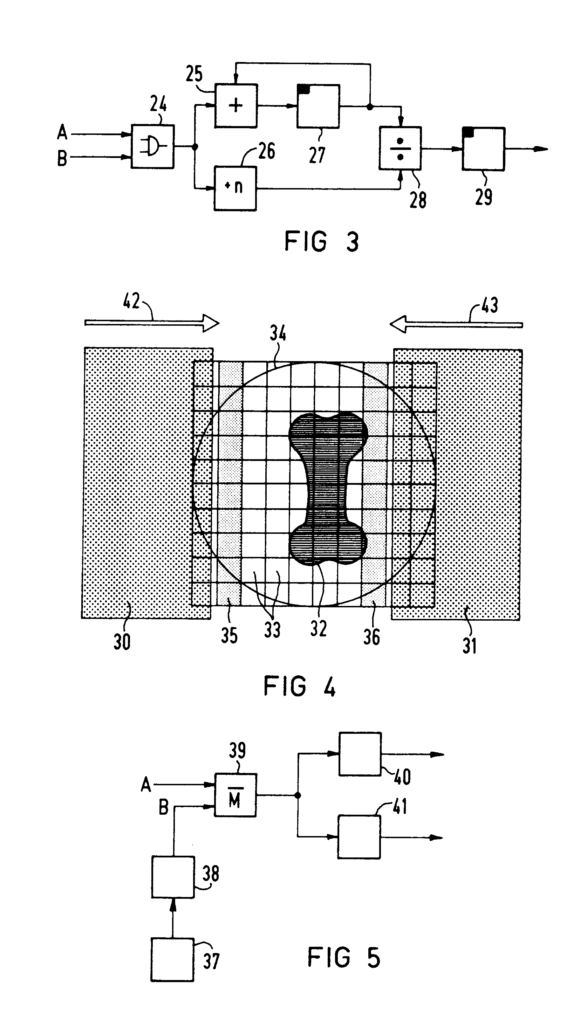

Die erste Mittelwertschaltung 17 kann dabei den in Fig. 3 beschriebenen Aufbau aufweisen. Die Eingänge A und B der Mittelwertschaltung 17 sind mit einer Torschaltung 24 verbunden, an deren Ausgang eine zweite Additionsstufe 25 und ein zweiter Zähler 26 angeschlossen sind. Der Ausgang der zweiten Additionsstufe 25 ist über einen vierten Speicher 27 auf den zweiten Eingang der zweiten Additionsstufe 25 zurückgekoppelt. Die Ausgänge des zweiten Zählers 26 und des vierten Speichers 27 sind mit einer zweiten Teilerstufe 28 verbunden. Das Ausgangssignal der zweiten Teilerstufe 28 bildet über ein Register 29 das Ausgangssignal der ersten Mittelwertschaltung 17, das der Schwellwertschaltung 16 zugeführt wird.

In der Reduktionsschaltung 9 bis 14 soll das Bild der Fernsehkamera, das etwa eine Auflösung von 512 × 512 Bildpunkten aufweist, zu einer Matrix von 64 × 64 Bildbereichen zusammengefaßt werden. Das bedeutet aber, daß 64 Bildpunkte, bzw. 32 Bildpunkte pro Halbbild einen Bildbereich ergeben. Hierzu wird auf der analogen Seite durch den Tiefpaß 9 innerhalb einer Zeile der Mittelwert von acht Bildpunkten bestimmt. Der A/D-Wandler 10 tastet diesen Mittelwert nach Ende jedes Bildbereiches innerhalb der Zeile ab und speichert ihn über die erste Additionsstufe 11 in dem entsprechenden Speicherplatz des ersten Speichers 12. Für die erste Zeile des jeweiligen Bildbereiches wird gesteuert durch die erste Schaltstufe 13 kein Wert aus dem ersten Speicher 12 ausgelesen und der ersten Additionsstufe 11 zugeführt, so daß nur der von dem A/D-Wandler 10 gelieferte Wert in den ersten Bildspeicher 12 gelangt. Für die nächsten drei Zeilen innerhalb dieses Bildbereiches verbindet die erste Schaltstufe 13 den Ausgang des ersten Speichers 12 mit der ersten Additionsstufe 11, so daß eine Addition der aktuellen und der gespeicherten Werte erfolgt. Sind diese vier Zeilen des Bildbereiches zusammengefaßt, so schaltet die zweite Schaltstufe 14 durch und gibt diesen Wert an den zweiten Speicher 15, in dem also der Mittelwert der Helligkeit des Bildbereiches eines Halbbildes abgespeichert wird.

Gleichzeitig mit der Abspeicherung der Mittelwerte für die einzelnen Bildbereiche in dem zweiten Speicher 15 werden diese Mittelwerte in der ersten Mittelwertschaltung 17 zu einem Gesamtmittelwert für das vollständige Bild zusammengefaßt. Gesteuert durch die Torschaltung 24 werden in der zweiten Additionsstufe 25 die Mittelwerte der relevanten Bildbereiche aufaddiert und in dem zweiten Zähler 26 die relevanten Bildbereiche gezählt. Hierzu werden von der Torschaltung 24 die Bildbereiche unterdrückt, die beispielsweise dem Kreisausschnitt und den von der Tiefenblende 8 abgedeckten Bildbereichen entsprechen. Diese Bildbereiche sind in dem dritten Speicher 20 enthalten.

Durch Division der in dem vierten Speicher 27 enthaltenen Summe der Mittelwerte durch den in dem zweiten Zähler 26 enthaltenen Zählerstand in der zweiten Teilerstufe 28 wird der Gesamtmittelwert des Halbbildes ermittelt und in dem Register 29 abgelegt.

Dieser Gesamtmittelwert wird der Schwellwertschaltung 16 zugeführt, die daraus ihre Schwelle ermittelt. Das bedeutet aber, daß bei Veränderung des Gesamtmittelwertes auch die Schwelle nachgeführt wird. Mit dieser Schwelle werden in der Schwellwertschaltung 16 die aus dem zweiten Speicher 15 ausgelesenen Mittelwerte verglichen. Die Werte, die oberhalb der Schwelle liegen, geben dabei die Bildbereiche an, innheralb derer die Direktstrahlung liegt. Die Mittelwerte, die unterhalb dieser Schwelle liegen, geben die durch das Objekt geschwächten Strahlungsbereiche an.

In der der Schwellwertschaltung 16 folgenden Maskierungsschaltung 19 werden die Bildbereiche ausgeblendet, die nicht für die Bildbewertung verwendet werden sollen. Hierzu werden in dem dritten Speicher 20 die Bildbereiche gekennzeichnet, die beispielsweise dem Kreisausschnitt und der Stellung der Tiefenblende entsprechen. Die Maskierungsschaltung 19 kann dabei aus einer Torschaltung bestehen, die von den aus den dritten Speicher 20 ausgelesenen Werten geschaltet wird.

Alle Meßwerte der Bildbereiche, die dunkler als die durch die Schwelle festgelegten Werte sind und nicht durch die Maskierungsschaltung 19 ausmaskiert wurden, werden in der nachfolgenden Integrationsstufe 21 aufintegriert. Gleichzeitig wird die Anzahl der summierten Bildbereiche in dem ersten Zähler 22 gezählt. Anschließend wird der in der Integrationsstufe 21 ermittelte Wert in der ersten Teilerstufe 23 durch den Stand des ersten Zählers 22 dividiert, so daß man einen Mittelwert erhält, der als Ist-Wert für den KV-Regelkreis des Hochspannungsgenerators 1 verwendet wird.

Zusätzlich kann der Stand des ersten Zählers 22 als Maß für die Größe des durchleuchteten Objekts verwendet werden. Der Meßwert der Integrationsstufe 21 kann zur Berechnung der auf das Objekt fallenden Röntgendosis dienen.

Anhand der Fig. 4 und 5 wird nun die automatische Steuerung der Tiefenblende 8 anhand einer einfachen Tiefenblende 8 mit zwei Lamellen 30 und 31 näher erläutert. In der Fig. 4 ist ein Röntgenstrahlenbild dargestellt, das ein Objekt 32, beispielsweise einen Knochen, zeigt. Ein Teil des Bildes ist durch die Lamellen 30 und 31 verdeckt. Das Bild ist in einzelne Bildbereiche 33 unterteilt. Der Kreis 34 kennzeichnet den Rand des sichtbaren Bildes und somit die in der Röntgentechnik übliche Kreisaustastung. Die für die Meßwerterfassung zur Steuerung der Lamellen 30 und 31 der Tiefenblende 8 relevanten Bildbereiche liegen in den vor den Lamellen 30 und 31 gekennzeichneten Spalten 35 und 36.

Die Steuerschaltung zur Steuerung der Lamellen 30 und 31 kann den in Fig. 5 gezeigten Aufbau aufweisen. Von der Tiefenblende 8 zugeordneten Positionsgebern 37 wird ein Signal, das der Stellung der Lamellen 30 und 31 entspricht, einer Markierungsschaltung 38 zugeführt, die vollständige Bildbereiche kennzeichnet, die vor den Lamellen 30 und 31 liegen. Diese entsprechen den Bildbereichen in den Spalten 35 und 36. Das Ausgangssignal der Markierungsschaltung 38 wird als Steuersignal einer zweiten Mittelwertschaltung 39 zugeführt, die ebenfalls den in Fig. 3 gezeigten Aufbau aufweisen kann. Den zweiten Eingang der zweiten Mittelwertschaltung 39 werden die an der zweiten Schaltstufe 14 anliegenden Mittelwerte der einzelnen Bereiche zugeführt. Die zweite Mittelwertschaltung 39 bildet aus den in den Spalten 35 und 36 befindlichen Bildbereichen getrennt die Mittelwerte für die Spalten 35 und 36. An der zweiten Mittelwertschaltung 39 sind zwei Auswerteschaltungen 40 und 41 angeschlossen, wobei der ersten Auswerteschaltung 40 der der ersten Spalte 35 zugeordnete Mittelwert und der zweiten Auswerteschaltung 41 der der zweiten Spalte 36 zugeordnete Mittelwert zugeführt wird. Aufgrund dieser Mittelwerte erkennen die Auswerteschaltungen 40 und 41, ob sich in den Bildbereichen der Spalten 35 und 36 ein Objekt befindet, oder ob in diesen Bildbereichen Direktstrahlung vorliegt.

Bei dem in Fig. 4 dargestellten Fall befindet sich innerhalb der ersten Spalte 35 kein Objekt 32, so daß die erste Auswerteschaltung 40 die Stellmittel für die erste Lamelle 30 derart ansteuern, daß diese in Richtung des ersten Pfeiles 42 auf das Objekt 32 zubewegt wird. Durch die Positionsgeber 37 wird dann die nächste Spalte markiert, innerhalb der wiederum der Mittelwert gebildet wird. Dies erfolgt so lange, bis sich diese erste Lamelle 30 in einer ähnlichen Position wie die zweite Lamelle 31 befindet.

Hier hat die zweite Auswerteschaltung 41 erkannt, daß ein Teil des Objektes 32 sich in der zweiten Spalte 36 befindet. Aus diesem Grund steuert die zweite Auswerteschaltung 41 das Stellglied für die zweite Lamelle 31 nur so lange an, daß sich die zweite Lamelle 31 in Richtung des zweiten Pfeiles 43 auf die Spalte 36 zubewegt, bis sie beispielsweise die Spalte 36 berührt. Dadurch ist sichergestellt, daß das gewünschte Objekt 32 vollständig wiedergegeben wird, während die zur Direktstrahlung gehörenden unerwünschten Bildbereiche ausgeblendet werden.

Durch eine derartige Vorrichtung erhält man einen Meßwert, der den gesamten relevanten Bildinhalt berücksichtigt. Dadurch wird die Dominante mit jedem Fernsehhalbbild an das Objekt angepaßt, so daß sie immer auf dem Objekt liegt. Gleichzeitig kann eine automatische Steuerung der Tiefenblende 8 erreicht werden.

**Patentansprüche**

1. Röntgendiagnostikeinrichtung mit einem Röntgengenerator (1), einer Röntgenröhre (2), einer Röntgenbildverstärker-Fernsehkette (4 bis 7), die einen Röntgenbildverstärker (4), eine Fernsehkamera (5) und einen Monitor (7) aufweist, und mit einer eine Schwellwertschaltung aufweisenden, an der Fernsehkamera (5) angeschlossen en Regelschaltung (6) für die Röntgendiagnostikeinrichtung, **dadurch gekennzeichnet,** daß die Regelschaltung (6) eine Reduktionsschaltung (9 bis 14) zur Datenreduktion aufweist, die mehrere Bildpunkte des Röntgenbildes zu Bildbereichen zusammenfaßt, daß die Schwellwertschaltung (16) zur Konturerkennung mit der Reduktionsschaltung (9 bis 14) verbunden ist, die die Meßwerte der einzelnen Bildbereiche mit einem Schwellwert vergleicht und nur die Meßsignale an den Ausgang durchläßt, die dunkleren Bereichen zugeordnet sind und relevanten Bildbereichen entsprechen.

2. Röntgendiagnostikeinrichtung nach Anspruch 1, **dadurch gekennzeichnet,** daß an der Schwellwertschaltung (16) eine Integrationsschaltung (21, 22) angeschlossen ist, die einen Mittelwert der relevanten Bildbereiche bestimmt, und daß die Integrationsschaltung (21, 22) mit dem Röntgengenerator (1) zur Regelung verbunden ist.

3. Röntgendiagnostikeinrichtung nach Anspruch 1 oder 2, **dadurch gekennzeichnet,** daß die Regelschaltung (6) eine Maskierungsschaltung (19, 20) aufweist, die irrelevante, ausgeblendete Bildbereiche kennzeichnet und die mit der Schwellwertschaltung (16) zur Unterdrückung der Meßsignale der irrelevanten Bildbereiche verbunden ist.

4. Röntgendiagnostikeinrichtung nach einem der Ansprüche 1 bis 3, **dadurch gekennzeichnet,** daß an der Schwellwertschaltung (16) eine Detektorschaltung (17) angeschlossen ist, die den Mittelwert der Helligkeit des gesamten relevanten Bildbereiches bestimmt, und aus dem die Schwelle ermittelt.

5. Röntgendiagnostikeinrichtung mit einer in den Strahlengang der Röntgenröhre (2) angeordneten Tiefenblende (8) nach einem der Ansprüche 1 bis 4, **dadurch gekennzeichnet,** daß die Regelschaltung (6) mit einer Steuerschaltung (18) der Tiefenblende (8) verbunden ist.

## Claims

1. X-ray diagnostic device with an X-ray generator (1), an X-ray tube (2), an X-ray image-intensifier television chain (4 to 7), which has an Xray image intensifier (4), a television camera (5) and a monitor (7), and with a control circuit (6), having a threshold-value circuit and being attached to the television camera (5), for the X-ray diagnostic device, characterized in that the control circuit (6) has a reduction circuit (9 to 14) for data reduction, which collates several image points of the X-ray image into image regions, in that the threshold-value circuit (16) for contour recognition is connected to the reduction circuit (9 to 14), which compares the measured values of the individual image regions with a threshold value and only passes the measured signals at the output which are associated with darker regions and correspond to relevant image regions.

2. X-ray diagnostic device according to claim 1, characterized in that an integration circuit (21, 22) is attached to the threshold-value circuit (16), the integration circuit determining a mean value of the relevant image regions, and in that the integration circuit (21, 22) is connected to the X-ray generator (1) for the control.

3. X-ray diagnostic device according to claim 1 or 2, characterized in that the control circuit (6) has a masking circuit (19, 20) which distinguishes irrelevant, masked-out image regions and which is connected to the threshold-value circuit (16) for the suppression of the measured signals of the irrelevant image regions.

4. X-ray diagnostic device according to one of claims 1 to 3, characterized in that a detector circuit (17) is attached to the threshold-value circuit (16), the detector circuit determining the mean value of the brightness of the entire relevant image region and determining therefrom the threshold value.

5. X-ray diagnostic device with a depth stop (8) arranged in the beam path of the X-ray tube (2) according to one of claims 1 to 4, characterized in that the control circuit (6) is connected to a control circuit (18) of the depth stop (8).

## Revendications

1. Appareil de radiodiagnostic comportant un générateur radiologique (1), un tube (2) à rayons X, une chaîne de röngten-télévision (4 à 7), qui comprend un amplificateur de brillance radiologique (4), une caméra de télévision (5) et un moniteur (7), et un circuit de régulation (6) qui possède un circuit à valeur de seuil et est raccordé à la caméra de télévision (5), pour l'appareil de radiodiagnostic, caractérisé par le fait que le circuit de régulation (6) possède un circuit de réduction (9 à 14) servant à réaliser la réduction des données et qui réunit plusieurs points image de la radiographie pour former des zones d'image, que le circuit à valeur de seuil (16) utilisé pour l'identification des contours est raccordé au circuit de réduction (9 à 14), qui compare les valeurs de mesure des différentes zones de l'image à une valeur de seuil et ne transmet à la sortie que les signaux de mesure qui sont associés aux zones plus sombres et correspondent à des zones d'image intéressantes.

2. Appareil de radiodiagnostic suivant la revendication 1, caractérisé par le fait qu'au circuit à valeur de seuil (16) est raccordé un circuit d'intégration (21,22), qui détermine une valeur moyenne des zones d'images intéressantes et que le circuit d'intégration (21,22) est raccordé au générateur radiologique (1) pour la régulation.

3. Appareil de radiodiagnostic suivant la revendication 1 ou 2, caractérisé par le fait que le circuit de régulation (6) comporte un circuit de masquage (19,20), qui caractérise des zones inintéressantes et occultées de l'image et qui est raccordé au circuit à valeur de seuil (16) pour supprimer les signaux de mesure des zones inintéressantes de l'image.

4. Appareil de radiodiagnostic suivant la revendication 1 à 3, caractérisé par le fait qu'au circuit à valeur de seuil (16) est raccordé un circuit de détection (17), qui détermine la valeur moyenne de la luminosité de l'ensemble de la zone d'image intéressante et détermine le seuil à partir de cette valeur.

5. Appareil de radiodiagnostic comportant un diaphragme de profondeur (8) installé dans le trajet du rayonnement du tube (2) à rayons X suivant l'une des revendications 1 à 4, caractérisé par le fait que le circuit de régulation (6) est raccordé à un circuit (18) de commande du diaphragme de profondeur (8).

FIG 1

FIG 2

FIG 3

FIG 4

FIG 5